# EUROPÄISCHE PATENTSCHRIFT

(11) **EP 0 542 678 B1**
(45) Veröffentlichungstag und Bekanntmachung des Hinweises auf die Patenterteilung: **15.11.1995**
(21) Anmeldenummer: 92810843.0
(22) Anmeldetag: 03.11.1992
(51) Int. Cl.: B01D 25/26, B01D 25/38

(54) **Selbstreinigende Filtereinrichtung zur Desinfektion und Entfernung von Trübungen aus Rohwasser**
Self-cleaning filtering device for the disinfection and removal of turbidities from raw water
Dispositif de filtration autonettoyant pour la désinfection et l'élimination d'opacité de l'eau brute

(30) Priorität: 14.11.1991 CH 3315/91
(43) Veröffentlichungstag der Anmeldung: 19.05.1993
(73) Patentinhaber: LUKOPAT AG, CH-8750 Glarus (CH)
(72) Erfinder: Grüter, Peter, CH-8105 Watt (CH)
(74) Vertreter: Groner, Manfred

(56) Entgegenhaltungen:
- EP-A- 0 425 028
- DE-A- 2 630 575
- DE-A- 3 814 373
- US-A- 2 841 287

## Beschreibung

Die Erfindung betrifft eine selbstreinigende Filtereinrichtung zur Desinfektion und Entfernung von Trübungen aus Rohwasser, mit Filterelementen aus festem Material, insbesondere aus Keramik, wobei die Filterelemente jeweils eine vom Rohwasser zu durchstromende Filterfläche aufweisen. Durch die DE-A-3 814 373 ist eine Filtereinrichtung dieser Art bekannt geworden, die auf einem Rohr angeordnete Filterscheiben aus Keramik aufweist. Zur Abreinigung ist der Filter mit einem Drehantrieb versehen. Bei einer Drehung der Filter streifen gehäusefeste Abstreifelemente mit an Filterscheiben anliegenden Zinken dort angelagerte Schmutzstoffe, Schlamm od.dgl. ab. Der Filter kann zudem mit gegensinniger Strömungsrichtung rückgespült werden.

Weiter ist im Stand der Technik eine Filtereinrichtung bekannt, bei welcher das Wasser mit einem konventionellen Mehrschichtfilter gereinigt, nachher mit Flockungsmittel versetzt und mit einem UV-Strahler desinfiziert wird. Der Unterhalt dieser Filtereinrichtung ist vergleichsweise aufwendig, da die Filter regelmässig gespült, Chemikalien nachgefüllt und die UV-Strahler ersetzt werden müssen. Ein weiterer Nachteil sind die hohen Investionskosten. Diese Filtereinrichtung hat deshalb keine grössere Verbreitung gefunden.

Vergleichsweise günstig in der Anschaffung sind Patronenfilter, die als Kunststoffpatronen oder als Stahlfilterpatronen angeboten werden. Die Kunststoffpatronen sind in einer Feinheit erhältlich, die keine Bakterien durchlassen. Sie können jedoch nicht rückgespült werden und müssen deshalb bei Verschmutzung ersetzt werden. Die Stahlfilterpatronen können bedingt rückgespült werden. Mit der Zeit verstopfen jedoch die Gewebe und die Patronen müssen ausgetauscht werden. In der Stahlausführung sind keine Patronen erhältlich, die Bakterien zurückhalten würden. Deshalb muss hier eine UV-Desinfetionsvorrichtung nachgeschaltet werden, oder mit Chlor oder Ozon desinfiziert werden.

Weiterhin sind sogenannte Kerzenfilter der Firma Katadyn bekannt. Diese zylindrischen Filterkerzen aus Keramik haben eine Porengrösse von 0,1 bis 0,2 µm. Da die üblicherweise aus dem Rohwasser zu entfernenden Bakterien grösser sind als diese Poren, werden diese mechanisch am "durchschlüpfen" gehindert. Zusätzlich ist das Keramikmaterial mit Silberpartikeln geimpft, was ein Durchwachsen der Bakterien durch den Filter verhindert. Mit Silber beschichtetes Stützkies ist eine weitere Sicherheitsmassnahme zum Verhindern der Verkeimung auf der Reinwasserseite. Bei diesem Filter besteht der Nachteil, dass er regelmässig geöffnet und von Hand gereinigt werden muss.

Schliesslich sind sogenannte Crossflow-Mikrofiltrationsanlagen bekannt, bei denen entweder Kunststoffmembrane oder gesinterte Keramik verwendet wird. Sowohl Kunststoffmembrane wie auch gesinterte Keramik lassen sich jedoch nur chemisch oder thermisch reinigen.

US-A-2 841 287 zeigt eine Filtereinrichtung mit einem Behälter zur Aufnahme des Rohwassers und mit einem in diesem Behälter angeordneten Filterelement aus einem Festkörper. Die Reinigung kann mit einem Schaber erfolgen, der auf der Oberfläche unter Druck entlang fährt und dabei das gefilterte Material entfernt.

Bei den bekannten Filtereinrichtungen besteht somit allgemein die Schwierigkeit, dass sie im Unterhalt vergleichsweise aufwendig sind und zum Teil nur von Fachleuten bedient werden können. Wesentliche Anwender solcher Filtereinrichtungen sind Zivilschutzorganisationen, das Rote Kreuz und Entwicklungsländer sowie die Getränkeindustrie und Berggemeinden und diesen ist gemeinsam, dass sie zur Betreuung der Filtereinrichtungen Leute einsetzen müssen, die dies nicht vollamtlich tun. Diese Anwender suchen deshalb ein Produkt, das einfach zu bedienen ist und das möglichst wenig Verständnis für den Aufbereitungsprozess des Wassers braucht. Insbesondere sind also chemische Reinigungsvorgänge nicht geeignet.

Der Erfindung liegt somit die Aufgabe zugrunde, eine Filtereinrichtung der genannten Art zu schaffen, die einfacher zu bedienen ist und dennoch vergleichsweise kostengünstig hergestellt werden kann. Die Aufgabe ist durch die Erfindung gemäss Anspruch 1 gelöst.

Bei der erfindungsgemässen Filtereinrichtung sind die Filterelemente auf wenigstens einem scheibenförmigen Träger angeordnet. Das zu reinigende Wasser durchdringt die Filterelemente und wird auf der Innerseite der Filtereinheit gesammelt, welche durch wenigstens einen Träger und Filterelemente gebildet ist. Wesentlich ist nun, dass die Filterelemente einer solchen Filtereinheit keine Hohlkörper sein müssen, sondern einfache sektorförmige Platten sein können. Diese Filterelemente können deshalb vergleichsweise einfach aus Keramik hergestellt werden. Die Schwierigkeiten bei der Herstellung von keramischen Hohlkörpern, wie beispielsweise Rissbildung, bedingt durch ein Schwinden und unterschiedliche Wandstärken werden bei der erfindungsgemässen Filtereinrichtung somit vermieden. Ebenfalls bildet die Einschränkung, dass die maximale Grösse des Keramikrohlings etwa 300 x 300 mm beträgt, bei der Realisation der erfindungsgemässen Filtereinrichtung kein Hindernis.

Die erfindungsgemässe Filtereinrichtung weist zudem Reinigungselemente auf, die relativ zu den Filterflächen bewegbar und an diese unter Druck anlegbar sind. Diese Reinigungselemente können mit einem Motor und Getriebe pneumatisch, hydraulisch oder von Hand angetrieben werden. Damit ist eine sehr einfache und auch automatische Reinigung der Filtereinheiten möglich.

Nach einer Weiterbildung der Erfindung ist die Filtereinheit von einer Welle durchdrungen, die einen Antrieb für die Reinigungselemente bildet. Auf der Welle können alternierend mehrerer Filtereinheiten und Reinigungseinheiten mit den genannten Reinigungselementen angeordnet werden. Die Filtereinheiten können stationär und gegenseitig abgestützt befestigt sein. Die Reinigungseinheiten sind fest durch Mitnehmer mit der Welle verbunden und werden zur Reinigung der Filtereinheiten kontinuierlich oder periodisch gedreht. Mit acht Filtereinheiten und neun Reinigungseinheiten kann eine Filterfläche erreicht werden, mit der bei üblichem Druck und geeignetem Durchmesser eine Wassermenge von 2 bis 6 m³ in der Stunde gereinigt werden kann. Die Leistung entspricht damit den Anforderungen, die von den genannten Anwendern üblicherweise gestellt werden.

Weitere vorteilhafte Merkmale ergeben sich aus der nachfolgenden Beschreibung, den abhängigen Ansprüchen sowie der Zeichnung. Ausführungsbeispiele der Erfindung werden nachfolgend anhand der Zeichnung näher erläutert. Es zeigen:
- Fig. 1: eine perspektivische Ansicht einer erfindungsgemässen Filtereinrichtung, wobei aus Darstellungsgründen Teile weggeschnitten und auseinandergezogen sind,
- Fig. 2: eine perspektivische Ansicht einer Filtereinheit, wobei Filterelemente aus Darstellungsgründen durchsichtig dargestellt sind,
- Fig. 3: ein Schnitt durch einen Teil einer erfindungsgemässen Filtereinrichtung, und
- Fig. 4: eine Ansicht einer Reinigungseinheit nach einer Variante.

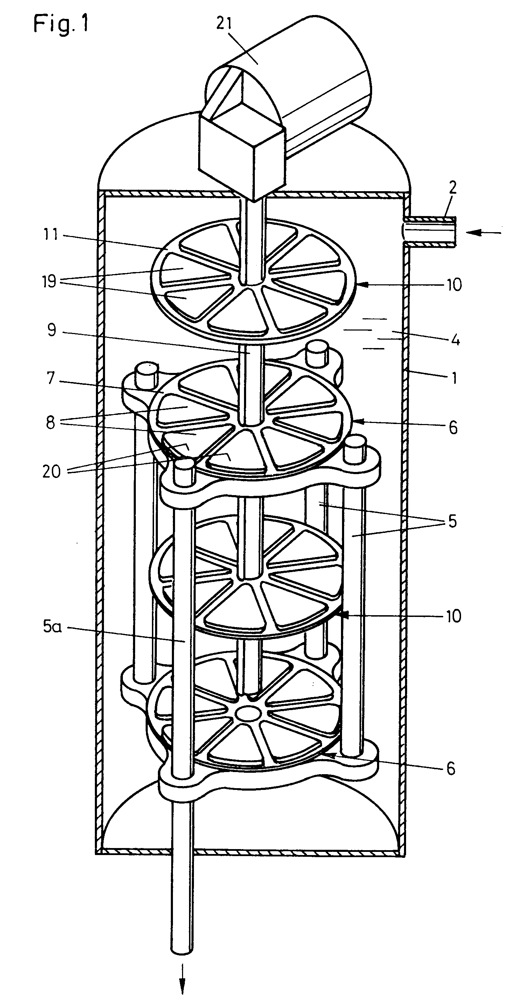

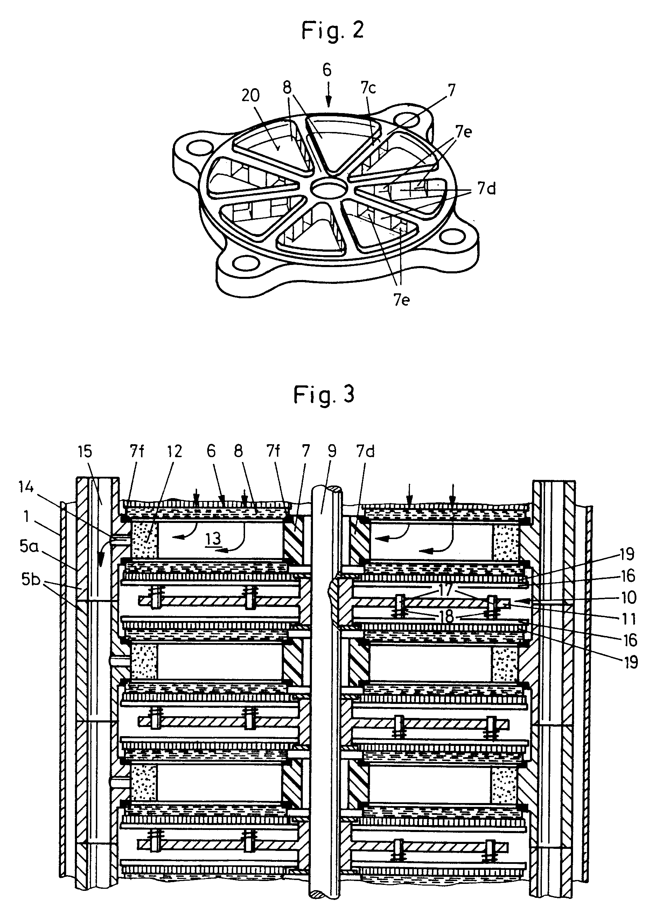

Wie die Figuren 1 und 3 zeigen, weist die erfindungsgemässe Filtereinrichtung einen Behälter 1 mit einem Einlass 2 für Rohwasser auf. Im Behälter 1 ist eine Welle 9 angeordnet, die nach aussen geführt ist und die von einem hier nur schematisch gezeigten Motor 21 angetrieben werden kann. Der Motor ist vorzugsweise ein Elektromotor mit starkem Untersetzungsgetriebe, so dass die Anzahl Umdrehungen auf beispielsweise 1-3 Umdrehungen pro Tag eingestellt werden kann. Der Motor 21 kann für bestimmte Anwendung jedoch auch durch einen Handantrieb ersetzt sein.

Die Welle 9 durchdringt mehrere Filtereinheiten 6, die an einem ruhenden Gestänge 5 befestigt sind. Die Reinigungselemente sind parallel zueinander angeordnet und befinden sich vollständig innerhalb des Behälters 1, der während des Reinigungsvorganges unter geeignetem Ueberdruck mit Rohwasser 4 gefüllt ist. Zwischen jeweils zwei Filtereinheiten 6 sowie am oberen und am unteren Ende sind Reinigungseinheiten 10 angeordnet, die fest mit der Welle 9 verbunden sind und somit relativ zu den Filtereinheiten 6 mittels des Motors 21 gedreht werden können. Bei einer Filtereinrichtung zum Reinigen von etwa 2 bis 6 m³ Rohwasser in der Stunde sind etwa acht Filtereinheiten 6 und neun Reinigungseinheiten 10 vorgesehen. Die Nettofilterfläche beträgt dann total etwa 1,45 m².

Eine Filtereinheit 6 ist in Fig. 2 dargestellt. Diese weist einen beispielsweise aus Kunststoff im Spritzgiessverfahren hergestellten Träger 7 auf, auf dem oberseitig acht Filterelemente 8 und unterseitig ebenfalls acht Filterelemente 8 angeordnet sind. Diese hier aus Darstellungsgründen durchsichtig gezeigten Filterelemente 8 haben die Form eines Kreissektors und bilden vergleichsweise kleinflächige volle Platten vorzugsweise aus Keramik. Um ein Verkeimen zu verhindern, sind die Filterelemente 8 in an sich bekannter Weise mit Silberpartikeln geimpft. Wie ersichtlich, weist der Träger 7 die Form eines Rostes oder Rades auf. Radiale Stege 7c weisen axial verlaufende Verstärkungen 7d auf, zwischen denen Oeffnungen 7e ausgespart sind. Der Träger 7 bildet eine stabile Konstruktion, was wesentlich ist, da Keramikplatten üblicherweise keine grosse Festigkeit besitzen und die Filterelemente 8 vor einem Durchbiegen geschützt werden müssen. Jedes Filterelement 8 ist dazu an jeweils zwei Stegen 7c sowie einem Teil des Trägerrandes abgestützt. Die Verbindung der Filterelemente 8 am Träger 7 muss wasserdicht sein, was mit einer dazwischen angeordneten Flachdichtung 7f (Fig. 3) erreicht werden kann.

Die Filterelemente 8 und der Träger 6 weisen einen Innenraum 13 auf, der zum Innenraum des Behälters 1 hin wasserdicht abgeschlossen ist. In diesem Innenraum 13 wird das Reinwasser gesammelt, das durch Filterflächen 20 der Filterelmente 8 in diesen eingedrungen ist. Im Innenraum 13 sind gemäss Fig. 3 Entkeimungselemente 12 angeordnet, die mit Quarzsand gefüllt sind, wobei dieser Quarzsand vorzugsweise mit Silber beschichtet ist. Die Körnung des Quarzsandes beträgt beispielsweise 3-4 mm. Diese Entkeimungselemente 12 bilden einen weiteren Schutz gegen ein Verkeimen der Filterelemente 8. Die Entkeimungselemente 12 sind vorzugsweise am äusseren Rand des Innenraumes 13 angeordnet und decken eine Austrittsöffnung 14 ab, durch welche das im Innenraum 13 angesammelte Reinwasser nach aussen in einen Kanal 15 austreten kann. Wie die Fig. 3 zeigt, wird im Kanal 15 das aus sämtlichen Innenräumen 13 anfallende Reinwasser gesammelt. Der Kanal 15 verläuft in einer Leitung 5a, die an die Träger 7 angespritzt oder aus Einzelsegmenten 5b zusammengesetzt ist, und die beispielsweise am unteren Ende aus dem Behälter 1 austritt und an weitere, hier nicht gezeigte weiterführende Leitungen angeschlossen werden kann. Denkbar ist auch eine Ausführung, bei der mehrere Kanäle am Umfang der Filtereinheiten 6 vorgesehen sind.

Zur periodischen oder kontinuierlichen Reinigung der Filterflächen 20 werden die Reinigungseinheiten 10 mittels des Motors 21 gedreht, wobei Reinigungselemente 19 der Reinigungseinheiten 10 mittels Federkraft gegen die Filterflächen 20 der Filterelemente 8 gepresst werden. Die Reinigungselemente sind auf Platten 16 befestigt, die ihrerseits mittels Führungsbolzen 17 auf dem Träger 11 gelagert sind. Die genannte Federkraft wird von Druckfedern 18 ausgeübt, die am Träger 11 und an den Platten 16 abgestützt sind.

Die Reinigungselemente 19 bestehen vorzugsweise aus Edelkorund mit mittlerer Körnung. Es hat sich gezeigt, dass bei Verwendung solcher Reinigungselemente 19 die Filterelemente 8 im Jahr um etwa 5 mm abgetragen werden, was optimal ist. Hierbei entstehen an den Filterflächen 20 keine Riffen.

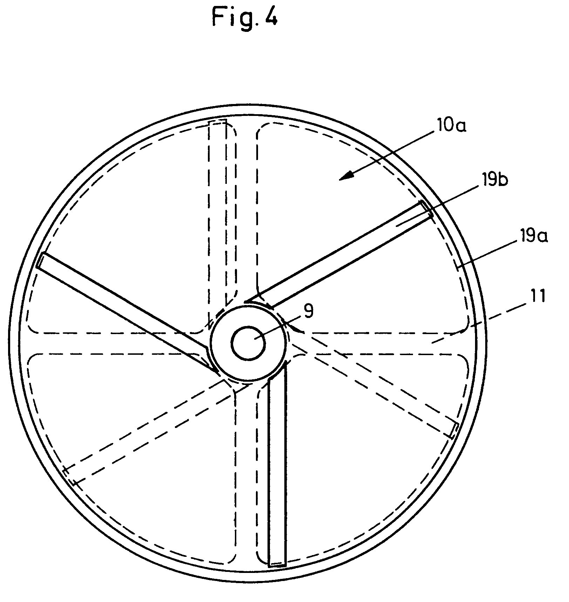

Die Filterelemente 8 müssen dann gereinigt werden, wenn ein maximal zulässiger Druckverlust erreicht ist. Vorzugsweise werden die Filterflächen 20 jedoch kontinuierlich gereinigt. Bei nicht kontinuierlicher Reinigung ist ein Manometer zur Steuerung vorgesehen. Die Anzahl Reinigungsumdrehungen wird bei kontinuierlicher Reinigung günstiger, da ein Elektromotor mit starkem Untersetzungsgetriebe verwendet werden kann. Bei einer in Fig. 4 gezeigten Variante einer Reinigungseinheit 10a sind Reinigungselemente 19a vorgesehen, die über Träger 11 drehfest mit der Welle 9 verbunden sind und die relativ schmale Reinigungsarme 19b aufweisen. Diese Arme 19b sind wie gezeigt gegenüber einer strahlenförmigen Anordnung aussermittig versetzt. In der gezeigten Ausführung weist die Reinigungseinheit 10a einen Träger 11 mit zwei Reinigungselementen 19a auf. Jedes Reinigungselement 19a ist mit drei Reinigungsarmen 19b versehen. Diese Ausführung hat den Vorteil, dass bei kontinuierlicher Reinigung nur ein kleiner Anteil der Filterflächen 20 durch die Reinigungselemente überdeckt ist. Die genannte Anordnung der Reinigungsarme 19b bewirkt, dass die abgearbeiteten Teile kontinuierlich nach aussen gefördert werden.

Wie ersichtlich, ist die erfindungsgemässe Filtereinrichtung weitgehend wartungsfrei und kann über einen längeren Zeitraum automatisch betrieben werden. Lediglich die Filterelemente 20 und die Reinigungselemente 19 bzw. 19a müssen gelegentlich ersetzt werden. Da wie erwähnt die Filterelemente 8 einfach herzustellende Platten sein können, ist zudem die Herstellung der erfindungsgemässen Filtereinrichtung vergleichsweise günstig. Durch die Lagerung dieser Filterelemente 8 auf Trägern 7 wird ein Durchbiegen dieser Elemente verhindert. Damit ist ein regelmässiger Abtrag der Filterelemente 8 gewährleistet. Die erfindungsgemässe Einrichtung kann vergleichsweise einfach montiert und wieder demontiert werden und mit unterschiedlicher Anzahl Reinigungselemente 6 hergestellt werden, ohne dass hierbei das Konstruktionsprinzip geändert werden müsste. Trotz der erheblichen Vorteile der erfindungsgmässen Filtereinrichtung ist diese ersichtlich mit verhältnismässig wenigen, einfachen und robusten Bauteilen realisierbar, so dass erfindungsgemäss eine Filtereinheit geschaffen wurde, welche nicht nur den filtertechnischen Anforderungen in hervorrangender Weise Rechnung trägt, sondern aufgrund ihrer einfachen und robusten Ausführbarkeit kostenmässig günstig und betrieblich äusserst zuverlässig ist.

## Patentansprüche

1. Selbstreinigende Filtereinrichtung zur Desinfektion und Entfernung von Trübungen aus Rohwasser, mit einem Behälter (1) zur Aufnahme des Rohwassers und mit in diesem Behälter angeordneten Filterelementen (8) aus festem Material, insbesondere Keramik, wobei diese Filterelemente jeweils eine vom Rohwasser zu durchströmende Filterfläche (20) aufweisen, dadurch gekennzeichnet, dass die Filterelemente (8) auf wenigstens einem Träger (7) angeordnet sind und mit diesem Träger eine Filtereinheit (6) mit einem Innenraum (13) zum Sammeln des Reinwassers bilden und dass Reinigungseinheiten (10) vorgesehen sind, die relativ zu den Filterflächen (20) bewegbar und an diese Filterflächen (20) unter Abarbeitung von Material der Filterelemente (8) unter Druck anlegbar sind.

2. Einrichtung nach Anspruch 1, dadurch gekennzeichnet, dass die Filtereinheit (6) und die Reinigungseinheiten (10) auf einer Welle (9) angeordnet sind und diese Welle (9) einen Antrieb für eine relative Drehbewegung zwischen der Filtereinheit (6) und den Reinigungseinheiten (10) bildet.

3. Filtereinrichtung nach Anspruch 2, dadurch gekennzeichnet, dass die Reinigungseinheiten (10,10a) drehfest mit der Welle (9) verbunden sind und die Filtereinheit (6) ortsfest angeordnet ist.

4. Filtereinrichtung nach einem der Ansprüche 1 bis 3, dadurch gekennzeichnet, dass der Träger (7) wabenförmig ausgebildet ist und dass die Filterelemente (8) ebene und kreissektorförmige Platten sind, die jeweils auf Stegen (7c) abgestützt sind.

5. Filtereinrichtung nach Anspruch 4, dadurch gekennzeichnet, dass die Filterelemente (8) aus Keramik hergestellt sind, welche mit Silberpartikeln geimpft ist.

6. Filtereinrichtung nach einem der Ansprüche 1 bis 5, dadurch gekennzeichnet, dass im Innenraum (13) mit Silber beschichteter Quarzsand (12) angeordnet ist.

7. Filtereinrichtung nach einem der Ansprüche 1 bis 6, dadurch gekennzeichnet, dass die Filtereinheit (6) im Träger (7) einen Durchgang (14) aufweist, über den der Innenraum (13) mit einem Kanal (15) zum Abführen des Reinwassers verbunden ist.

8. Filtereinrichtung nach einem der Ansprüche 1 bis 7, dadurch gekennzeichnet, dass die Reinigungseinheiten (10a) jeweils einen Träger (11) mit Reinigungselementen (19a) aufweisen, die mehrere vergleichsweise schmale Reinigungsarme (19b) besitzen.

9. Filtereinrichtung nach Anspruch 8, dadurch gekennzeichnet, dass die Reinigungselemente (19a) aus Korund und insbesondere aus Edelkorund mittlerer Körnung hergestellt sind.

10. Filtereinrichtung nach einem der Ansprüche 1 bis 9, dadurch gekennzeichnet, dass die Reinigungseinheiten (10) kontinuierlich oder alternierend bewegbar sind.

## Claims

1. Self-cleaning filter device for disinfecting and removing the cloudiness from untreated water, having a container (1) for the purpose of receiving the untreated water and having disposed in this container filter elements (8) made from a solid material, in particular ceramics, wherein these filter elements comprise in each case a filter area (20) through which the untreated water flows, characterised in that the filter elements (8) are disposed on at least one carrier (7) and form together with this carrier one filter unit (6) having an inner space (13) for collecting the clean water and that cleaning units (10) are provided, which cleaning units can move relative to the filter areas (20) and can be placed under pressure against these filter areas (20) whilst removing the material from the filter elements (8).

2. Device according to claim 1, characterised in that the filter unit (6) and the cleaning units (10) are disposed on a shaft (9) and this shaft (9) forms a drive for a relative rotational movement between the filter unit (6) and the cleaning units (10).

3. Filter device according to claim 2, characterised in that the cleaning units (10, 10a) are non-rotatably connected to the shaft (9) and the filter unit (6) is fixedly disposed.

4. Filter device according to any of claims 1 to 3, characterised in that the carrier (7) is in the form of a honey-comb and that the filter elements (8) are planar and circular sector plates which are supported in each case on cross pieces (7c).

5. Filter device according to claim 4, characterised in that the filter elements (8) are manufactured in ceramics which are injected with silver particles.

6. Filter device according to any one of claims 1 to 5, characterised in that quartz sand (12) treated with silver is disposed in the inner space (13).

7. Filter device according to any one of claims 1 to 6, characterised in that the filter unit (6) comprises a through passage (14) in the carrier (7), by means of which through passage the inner space (13) communicates with a passage (15) for the purpose of carrying away the clean water.

8. Filter device according to any one of claims 1 to 7, characterised in that the cleaning units (10a) comprise in each case a carrier (11) having cleaning elements (19a) which comprise a plurality of comparatively narrow cleaning arms (19b).

9. Filter device according to claim 8, characterised in that the cleaning elements (19a) are manufactured from corundum and in particular from special fused alumina of average graining.

10. Filter device according to any one of claims 1 to 9, characterised in that the cleaning units (10) can be moved continuously or alternately.

## Revendications

1. Dispositif de filtre autonettoyant pour la désinfection et l'élimination de turbidités d'une eau brute, comportant un réservoir (1) servant à recevoir l'eau brute, et des éléments filtrants (8) disposés dans ce récipient et formés d'une substance solide, notamment une céramique, ces éléments filtrants possédant chacun une surface filtrante (20) devant être traversée par l'eau brute, caractérisé en ce que les éléments filtrants (8) sont disposes sur au moins un support (7) et forment, avec ce support, une unité filtrante (6) comportant une chambre intérieure (13) servant à collecter l'eau pure, et qu'il est prévu des unités de nettoyage (10), qui peuvent être déplacées par rapport aux surfaces filtrantes (20) et qui peuvent être appliquées sous pression contre ces surfaces filtrantes (20) moyennant une érosion du matériau des éléments filtrants (8).

2. Dispositif de filtre selon la revendication 1, caractérisé en ce que l'unité filtrante (6) et les unités de nettoyage (10) sont montées sur un arbre (9) et que cet arbre (9) forme un dispositif d'entraînement permettant un mouvement de rotation relative entre l'unité filtrante (6) et les unités de nettoyage (10).

3. Dispositif de filtre selon la revendication 2, caractérisé en ce que les unités de nettoyage (10,10a) sont solidaires en rotation avec l'arbre (9) et que l'unité filtrante (6) est montée fixe.

4. Dispositif de filtre selon l'une des revendications 1 à 3, caractérisé en ce que le support (7) est réalisé en forme de nid d'abeilles et que les éléments filtrants (8) sont des plaques planes en forme de secteurs circulaires, qui sont supportées respectivement par des barrettes (7c).

5. Dispositif de filtre selon la revendication 4, caractérisé en ce que les éléments filtrants (8) sont réalisés en une céramique, dans laquelle sont insérées des particules d'argent.

6. Dispositif de filtre selon l'une des revendications 1 à 5, caractérisé en ce que du sable quartzeux (12) recouvert d'argent est disposé dans la chambre intérieure (13).

7. Dispositif de filtre selon l'une des revendications 1 à 6, caractérisé en ce que l'unité filtrante (6) possède, dans le support (7), un passage (14), au moyen duquel la chambre intérieure (13) est reliée à un canal (15) servant à évacuer l'eau pure.

8. Dispositif de filtre selon l'une des revendications 1 à 7, caractérisé en ce que les unités de nettoyage (10a) comportent respectivement un support (11) pourvu d'éléments de nettoyage (19a), qui possèdent plusieurs bras de nettoyage comparativement étroits (19b).

9. Dispositif de filtre selon la revendication 8, caractérisé en ce que les éléments de nettoyage (19a) sont réalisés en corindon et notamment en corindon raffiné de granulométrie moyenne.

10. Dispositif de filtre selon l'une des revendications 1 à 9, caractérisé en ce que les unités de nettoyage (10) peuvent être déplacées continûment ou alternativement.
